# EUROPÄISCHE PATENTSCHRIFT

(11) **EP 4 240 511 B1**
(45) Veröffentlichungstag und Bekanntmachung des Hinweises auf die Patenterteilung: **24.06.2026**
(21) Anmeldenummer: 21801934.7
(22) Anmeldetag: 02.11.2021
(51) Int. Cl.: B01D 46/00, B01D 46/24

(54) **FILTERSYSTEM, FILTERELEMENT UND VERWENDUNG**
FILTER SYSTEM, FILTER ELEMENT AND USE
SYSTÈME DE FILTRE, ÉLÉMENT FILTRANT ET UTILISATION

(30) Priorität: 03.11.2020 DE 102020128911
(43) Veröffentlichungstag der Anmeldung: 13.09.2023
(73) Patentinhaber: MANN+HUMMEL GmbH, 71636 Ludwigsburg (DE)
(72) Erfinder: ENGLMAIER, Michael, Kalamazoo, Michigan 49009 (US); KOLAR, David, 59451 Krizanov (CZ); SCHMID, Daniel, 74343 Sachsenheim (DE); STARK, Dennis, 69256 Mauer (DE); KULT, Ondfej, 58601 Jihlava (CZ)
(74) Vertreter: Mann + Hummel Intellectual Property
(86) Internationale Anmeldenummer: PCT/EP2021/080335
(87) Internationale Veröffentlichungsnummer: WO 2022/096434

(56) Entgegenhaltungen:
- WO-A1-2019/231820
- DE-A1- 102008 008 328
- DE-T5- 112012 004 521
- US-A1- 2012 031 060

## Beschreibung

### Technisches Gebiet

Die vorliegende Erfindung betrifft ein Filtersystem und ein Filterelement eines derartigen Filtersystems sowie die Verwendung eines Filterelements in einem derartigen Filtersystem.

### Stand der Technik

Ein Filtersystem kann ein Filtergehäuse und ein entnehmbar in dem Filtergehäuse aufgenommenes Filterelement mit einem gefalteten Filtermedium aufweisen. Zum Zuführen eines zu reinigenden Fluids zu dem Filterelement umfasst das Filtergehäuse einen Fluideinlass. Zum Abführen des von Partikeln gereinigten Fluids ist ein Fluidauslass vorgesehen. Der Fluidauslass kann ein rohrförmiges Bauteil sein, welches mit einem Gehäuseunterteil des Filtergehäuses verrastet oder verschnappt ist. Aus dem Stand der Technik, beispielsweise aus DE 11 2012 004 521 T5 oder US 2020/0155988 A1, sind derartige Rast- oder Schnappverbindungen bekannt, bei welchen der Fluidauslass eine umlaufende, ringförmige Rastkante aufweist, hinter welche eine Vielzahl von umlaufend am Gehäuseunterteil des Filtergehäuses angeordnete, elastisch verformbare Schnappelemente einrasten, die hierzu bei der Montage temporär radial nach außen elastisch verformt werden, beim Einschieben des Fluidauslasses in das Gehäuseunterteil über die Rastkante bewegt werden und nach dem Überwinden der Rastkante sich wieder radial nach innen bewegen und hinter bzw. an der Rastkante einrasten oder einschnappen zu können. Durch Vibrationen im Betrieb des Filtersystems kann es zu kleinen Relativbewegungen zwischen dem Fluidauslass und dem Gehäuseunterteil, insbesondere im Bereich der Schnappverbindung, kommen. Diese Relativbewegungen können zu einer Geräuschentwicklung führen. Ferner können diese Relativbewegungen auch zu einem Verschleiß an dem Fluidauslass und/oder an dem Gehäuseunterteil führen. Dies gilt es zu vermeiden.

Aus der US 2012/031060 A1, der DE 11 2012 004 521 T5 sowie der DE 10 2008 008 328 A1 sind weitere gattungsbildende Filterelemente bekannt.

### Offenbarung der Erfindung

Vor diesem Hintergrund liegt der vorliegenden Erfindung die Aufgabe zugrunde, ein verbessertes Filtersystem anzugeben.

Demgemäß wird ein Filtersystem mit einem Filtergehäuse, welches einen Fluideinlass zum Einleiten eines Fluids in das Filtergehäuse umfasst, einem Fluidauslass zum Ausleiten des Fluids aus dem Filtergehäuse, einem entnehmbar in dem Filtergehäuse aufgenommenen Filterelement, welches einen Positionier- und Dichtabschnitt zum Positionieren und Abdichten des Filterelements gegenüber dem Filtergehäuse umfasst, und elastisch verformbaren Schnappelementen vorgeschlagen, mit deren Hilfe das Filtergehäuse und der Fluidauslass formschlüssig miteinander verbunden sind, wobei der Positionier- und Dichtabschnitt insbesondere radial an den Schnappelementen anliegt und bevorzugt gegen die Schnappelemente gepresst ist, insbesondere radial gegen die Schnappelemente gepresst ist.

Dadurch, dass der Positionier- und Dichtabschnitt radial gegen die Schnappelemente gepresst ist, wirkt der Positionier- und Dichtabschnitt unterstützend und dämpfend auf die Schnappelemente, so dass diese im Betrieb des Filtersystems, beispielsweise aufgrund von Vibrationen, keine Relativbewegungen durchführen können. Hierdurch wird eine Geräuschentwicklung, beispielsweise durch ein Klappern der Schnappelemente, und ein Verschleiß der Schnappelemente zuverlässig verhindert.

Bevorzugt greifen die Schnappelemente in einen Eingriffsabschnitt formschlüssig ein zur formschlüssigen Verbindung des Filtergehäuses und dem Fluidauslass.

Bevorzugt weisen die Schnappelemente eine dem Eingriffsabschnitt zugewandte Seite und eine dem Eingriffsabschnitt abgewandte Seite auf. Bevorzugt liegt der Positionier- und Dichtabschnitt radial an den dem Eingriffsabschnitt abgewandten Seiten der Schnappelemente an.

Das Filtersystem ist vorzugsweise ein Luftfiltersystem. Dementsprechend ist das Filterelement ein Luftfilterelement. Das Filtersystem ist beispielsweise ein Ansaugluftfilter für eine Brennkraftmaschine. Das Filtergehäuse umfasst vorzugsweise ein topfförmiges Gehäuseunterteil sowie ein von dem Gehäuseunterteil abnehmbares Gehäuseoberteil. Das Filterelement kann zum Wechseln desselben aus dem Filtergehäuse entnommen und getauscht werden. Der Fluideinlass ist vorzugsweise rohrförmig. Beispielsweise ist der Fluideinlass seitlich an dem Gehäuseunterteil angeordnet. Das zu reinigende Fluid strömt somit insbesondere senkrecht zu einer Symmetrieachse des Filtersystems gegen das Filtermedium. Das gereinigte Fluid verlässt das Filtergehäuse durch den Fluidauslass. Der Fluidauslass ist insbesondere an dem Gehäuseunterteil angebracht. Der Fluidauslass kann Teil des Filtergehäuses, insbesondere des Gehäuseunterteils, sein.

Dies schließt jedoch nicht aus, dass der Fluidauslass, insbesondere zerstörungsfrei, von dem Filtergehäuse, insbesondere von dem Gehäuseunterteil, trennbar ist.

Das Filtermedium ist vorzugsweise ein zickzackförmig gefalteter Faltenbalg. Das Filtermedium kann zylinderförmig sein. Das Filtermedium ist entlang der Symmetrieachse betrachtet zwischen einer ersten Endscheibe und einer zweiten Endscheibe angeordnet. Die Endscheiben sind an Stirnseiten des Filtermediums angebracht. Insbesondere sind die Endscheiben fest mit dem Filtermedium verbunden. Die Endscheiben sind vorzugsweise aus einem elastisch verformbaren Kunststoffmaterial, wie beispielsweise einem Polyurethan, gefertigt. Beispielsweise können die Endscheiben an das Filtermedium angegossen oder angeschmolzen sein. Die Endscheiben können beispielsweise aus einem aufgeschäumten Polyurethan gefertigt sein.

Die erste Endscheibe weist vorzugsweise einen mittigen Durchbruch auf, durch welchen der Fluidauslass in das Filtergehäuse, insbesondere in das Filterelement, eingeführt ist. Die zweite Endscheibe ist vorzugsweise fluiddicht und verschließt das Filtermedium endseitig. Bevorzugt an der ersten Endscheibe ist der ringförmig um die Symmetrieachse umlaufende Positionier- und Dichtabschnitt vorgesehen. Der Positionier- und Dichtabschnitt kann außenseitig, das heißt der Symmetrieachse abgewandt, Vertiefungen oder Ausnehmungen aufweisen, in welche korrespondierende Eingriffselemente des Gehäuseunterteils formschlüssig eingreifen können. Hierdurch kann zum einen eine Positionierung des Filterelements gegenüber dem Gehäuseunterteil erreicht werden, und zum anderen kann verhindert werden, dass nicht zu dem Filtersystem zugehörige Filterelemente ohne derartige Ausnehmungen in dem Gehäuseunterteil montiert werden können.

Das Fluid wird als von Partikeln, wie beispielsweise Staub, kleinen Steinchen, Pflanzenbestandteilen oder dergleichen, zu reinigendes Fluid durch den Fluideinlass in das Filtergehäuse eingeleitet. Das zu reinigende Fluid strömt dann von einer Rohseite des Filterelements durch das Filtermedium hindurch auf eine Reinseite des Filterelements. Von der Reinseite wird das gereinigte Fluid über den Fluidauslass von dem Filtersystem weg und beispielsweise einer Brennkraftmaschine zugeführt. Das Fluid ist insbesondere Luft.

Die Schnappelemente können entweder an dem Filtergehäuse, insbesondere an dem Gehäuseunterteil, oder an dem Fluidauslass vorgesehen sein. Ferner können die Schnappelemente auch separate Bauteile sein. Die Schnappelemente sind elastisch, insbesondere elastisch, verformbar. Das heißt, die Schnappelemente können von einem undeformierten oder unverformten Zustand in einen deformierten oder verformten Zustand verbracht werden. Dabei sind die Schnappelemente jedoch in Richtung des unverformten Zustands vorgespannt, insbesondere federvorgespannt. Das heißt, dass zum Verbringen der Schnappelemente von dem unverformten Zustand in den verformten Zustand eine Kraft auf die Schnappelemente aufgebracht wird. Sobald diese Kraft nicht mehr wirkt, verformen bzw. bewegen sich die Schnappelemente selbsttätig von dem verformten Zustand zurück in den unverformten Zustand.

Eine formschlüssige Verbindung entsteht durch das Ineinander- oder Hintergreifen von mindestens zwei Verbindungspartnern, vorliegend den Schnappelementen und dem Filtergehäuse oder den Schnappelementen und dem Fluideinlass. Eine formschlüssige Verbindung kann bevorzugt zerstörungsfrei wieder getrennt werden. Dass der Positionier- und Dichtabschnitt "radial" an den Schnappelemente anliegt, bedeutet vorliegend bevorzugt, dass der Positionier- und Dichtabschnitt kraft- und/oder formschlüssig an den Schnappelemente anliegt, insbesondere dämpfend anliegt zur Dämpfung von Bewegungen und/oder Schwingungen der Schnappelemente, die beispielsweise durch äußere Anregung wie Vibrationen im Betrieb entstehen können. Dass der Positionier- und Dichtabschnitt "radial" gegen die Schnappelemente gepresst ist, bedeutet vorliegend, dass der Positionier- und Dichtabschnitt eine in oder entgegen einer Radialrichtung des Filtersystems orientierte Kraft auf die Schnappelemente aufbringt. Die Radialrichtung ist dabei senkrecht zu der Symmetrieachse und bevorzugt von dieser weg gerichtet. Die Radialrichtung kann auch zu der Symmetrieachse hin orientiert sein. Dass der Positionier- und Dichtabschnitt gegen die Schnappelemente "gepresst" ist, bedeutet vorliegend, dass der Positionier- und Dichtabschnitt derart gegen die Schnappelemente gedrückt ist, dass dieser elastisch verformt ist und insbesondere eine radial wirkende Kraft auf die Schnappelemente aufbringt.

Die Schnappelemente sind an einem Gehäuseunterteil des Filtergehäuses vorgesehen, wobei die Schnappelemente in einen an dem Fluidauslass vorgesehenen Eingriffsabschnitt formschlüssig eingreifen. Alternativ können die Schnappelemente auch an dem Fluidauslass vorgesehen sein, wobei die Schnappelemente in einen an dem Gehäuseunterteil vorgesehenen Eingriffsabschnitt eingreifen. Der Eingriffsabschnitt ist vorzugsweise eine ringförmig um die zuvor genannte Symmetrieachse umlaufende Ringnut, welche an dem Fluidauslass angeformt ist. Alternativ kann der Eingriffsabschnitt eine ringförmige Kante am Gehäuseunterteil sein, die beim Einbau von am Fluidauslass angeordneten Schnappelementen überwunden und im montierten Zustand von am Fluidauslass angeordneten Schnappelementen formschlüssig hintergriffen wird. Zum Verbinden des Fluidauslasses mit dem Gehäuseunterteil wird der Fluidauslass durch eine an dem Gehäuseunterteil vorgesehene Auslassöffnung hindurchgeführt. Dabei werden die Schnappelemente federelastisch verformt, bis diese in den Eingriffsabschnitt einschnappen oder einrasten und so den Fluidauslass formschlüssig mit dem Gehäuseunterteil verbinden. Bevorzugt werden dabei die Schnappelemente in einer Ausrückrichtung, insbesondere radial nach innen oder außen, federelastisch verformt, bis diese in einer Richtung entgegen der Ausrückrichtung in den Eingriffsabschnitt einschnappen oder einrasten und so den Fluidauslass formschlüssig mit dem Gehäuseunterteil verbinden. Der Fluidauslass kann bevorzugt nur dadurch wieder von dem Gehäuseunterteil getrennt werden, dass die Schnappelemente, beispielsweise mit Hilfe eines Werkzeugs, verformt und außer Eingriff mit dem Eingriffsabschnitt gebracht werden.

Die Schnappelemente sind in einem Neigungswinkel relativ zu einer Symmetrieachse des Filtersystems geneigt. Die Anzahl der Schnappelemente ist beliebig. Beispielsweise sind dreizehn derartige Schnappelemente vorgesehen, die gleichmäßig um die Symmetrieachse herum verteilt angeordnet sind. Die Schnappelemente ragen bevorzugt radial in die Auslassöffnung des Gehäuseunterteils ein. Die Schnappelemente können sich beispielsweise und bevorzugt entlang der Fläche eines Kegels erstrecken und/oder eine äußere Fläche eines Kegelstumpfs zumindest mit-bilden. Es sei verstanden, dass auch wenn hierdurch ein Teil der Erstreckungsrichtung der Schnappelemente eine Radialkomponente aufweist, die Schnappbewegung (in/gegen die Ausrückrichtung) im Wesentlichen in radialer Richtung und die Anlage bzw. die Verpressung des Positionier- und Dichtabschnitt gegen die Schnappelemente in funktional maßgeblicher Weise radialer Richtung stattfindet. Dies kann jedoch auch noch bei einer Neigung von 45° gegen die Mittelachse gegeben sein. Es kann deshalb auch in diesen Fällen von einer radialen Anlage oder einem radialen Verpressen gesprochen werden, da eine wesentliche Richtungskomponente in Radialrichtung orientiert ist.

In Ausführungsformen ist zwischen zwei benachbarten Schnappelementen ein spaltförmiger Zwischenraum vorgesehen. Das heißt, die Schnappelemente und die Zwischenräume sind abwechselnd angeordnet. Die Zwischenräume sind bevorzugt entlang von durch die Mittelachse des Filtergehäuses laufenden Ebenen orientiert. Dies ermöglicht eine individuelle Schnappbewegung der einzelnen Schnappelemente.

Bevorzugt weist jedes Schnappelement eine dem Positionier- und Dichtabschnitt zugewandte Seite und eine dem Positionier- und Dichtabschnitt abgewandte Seite auf. Bevorzugt ist dabei die dem Positionier- und Dichtabschnitt abgewandte Seite dem Eingriffsabschnitt zugewandt. Bevorzugt weist jedes Schnappelement eine dem Positionier- und Dichtabschnitt zugewandte Außenseite und eine dem Positionier- und Dichtabschnitt abgewandte Innenseite auf. An den Außenseiten der Schnappelemente liegt der Positionier- und Dichtabschnitt an. Im alternativen Fall von radial außerhalb des Positionier- und Dichtabschnitts angeordneten Schnappelementen weist jedes Schnappelement eine dem Positionier- und Dichtabschnitt zugewandte Innenseite und eine dem Positionier- und Dichtabschnitt abgewandte Außenseite auf. In diesem Fall liegt dann an den Innenseiten der Schnappelemente der Positionier- und Dichtabschnitt an.

Bevorzugt entspricht die Ausrückrichtung in montiertem Zustand einer dem Positionier- und Dichtabschnitt zugewandten Bewegungsrichtung. Das heißt im montierten Zustand bzw. im Betrieb kann der an den Schnappelementen anliegende Teil des Positionier- und Dichtabschnitts eine Bewegung der Schnappelemente in Ausrückrichtung dämpfen und/oder erschweren.

Der Positionier- und Dichtabschnitt umfasst eine Anlagefläche, welche radial an den Schnappelementen anliegt oder radial gegen die Schnappelemente gepresst ist und welche ebenfalls in dem Neigungswinkel relativ zu der Symmetrieachse geneigt ist. Die Anlagefläche liegt an den zuvor erwähnten Außenseiten oder alternativ Innenseiten der Schnappelemente an und drückt diese gegen den Eingriffsabschnitt des Fluidauslasses.

In Ausführungsformen bilden die Schnappelemente und ein an dem Gehäuseunterteil vorgesehener ringförmiger Aufnahmeflansch eine Verbindungsschnittstelle des Gehäuseunterteils. Der Aufnahmeflansch läuft vorzugsweise vollständig um die Symmetrieachse um. Insbesondere läuft der Aufnahmeflansch um die Auslassöffnung des Gehäuseunterteils um.

In Ausführungsformen bilden der Eingriffsabschnitt und ein an dem Fluidauslass vorgesehener scheibenförmiger Flansch eine Verbindungsgegenschnittstelle des Fluidauslasses, wobei die Verbindungsschnittstelle und die Verbindungsgegenschnittstelle derart zusammenwirken, dass die Schnappelemente formschlüssig in den Eingriffsabschnitt eingreifen und der Flansch in dem Aufnahmeflansch aufgenommen ist. Insbesondere liegt der Flansch dann, wenn dieser in dem Aufnahmeflansch aufgenommen ist, stirnseitig an dem Gehäuseunterteil, insbesondere an einem Bodenabschnitt des Gehäuseunterteils, an. Der Flansch erstreckt sich seitlich radial aus dem Fluidauslass heraus und läuft insbesondere vollständig um diesen um.

In Ausführungsformen ist der Fluidauslass gegenüber dem Gehäuseunterteil verdrehbar. Hierdurch ist es möglich, das Filtersystem an unterschiedliche Anwendungsfälle oder Einbausituationen anzupassen. Insbesondere ist der Fluidauslass drehbar in oder an dem Gehäuseunterteil gelagert.

Der Fluidauslass umfasst eine Dichtungsschnittstelle, mit welcher eine korrespondierende Dichtungsgegenschnittstelle des Positionier- und Dichtabschnitts radial verpresst ist. Die Dichtungsschnittstelle umfasst vorzugsweise eine zylinderförmig um die Symmetrieachse umlaufende Dichtfläche, gegen welche eine korrespondierende, ebenfalls vorzugsweise zylindrische Dichtfläche der Dichtungsgegenschnittstelle radial verpressbar ist. Ferner umfasst die Dichtungsschnittstelle bevorzugt eine sich über die Dichtfläche radial hinaus erstreckende Rippe, welche vorzugsweise vollständig um die Symmetrieachse umläuft. Die Rippe greift bevorzugt formschlüssig in eine bevorzugt vorgesehene, korrespondierende Nut der Dichtungsgegenschnittstelle ein. Hierdurch ist eine axiale Positionierung des Filterelements an dem Fluidauslass möglich.

Der Positionier- und Dichtabschnitt weist eine Dichtungsgegenschnittstelle mit einer zylindrischen Dichtfläche und die Anlagefläche auf. Weiter bevorzugt schließt die Anlagefläche axial auf der vom Filterelement weg weisenden Seite der Dichtfläche insbesondere unmittelbar an diese an und bildet weiter bevorzugt einen kegelstumpfförmigen Ring. Der Positionier- und Dichtabschnitt ist dabei in Form eines sich von einer offenen Endscheibe des Filterelements axial vom Filterelement weg erstreckenden, insbesondere einstückig mit dieser ausgebildeten, Ringwulstes ausgeführt. Dabei sind die zylindrische Dichtfläche und die Anlagefläche auf der radial innen liegenden Seite des Ringwulstes angeordnet, alternativ kann die zylindrische Dichtfläche des Positionier- und Dichtabschnitts auf der radialen Innenseite des Ringwulstes und die Anlagefläche auf der radialen Außenseite des Ringwulstes angeordnet oder durch diese zumindest mitgebildet sein.

In Ausführungsformen umfasst der Fluidauslass einen gitterförmigen Stützrohrabschnitt, welcher in das Filterelement hineinragt, und einen, insbesondere um 90° gekrümmten Stutzenabschnitt, welcher aus dem Filtergehäuse herausragt. Der Stützrohrabschnitt ist geeignet, das Filtermedium im Betrieb des Filtersystems von innen zu stützen. Mit Hilfe des Stutzenabschnitts wird das gereinigte Fluid von dem Filtersystem abgeführt. Der Stutzenabschnitt kann sich entlang der Symmetrieachse erstrecken oder um 90° gekrümmt sein und somit senkrecht zu der Symmetrieachse positioniert sein.

Ferner wird ein Filterelement eines derartigen Filtersystems vorgeschlagen. Das Filterelement ist, wie zuvor erwähnt, insbesondere ein Luftfilterelement. Das Filterelement umfasst die erste Endscheibe und die zweite Endscheibe, zwischen denen das Filtermedium angeordnet ist. Insbesondere an der ersten Endscheibe ist der Positionier- und Dichtabschnitt angeformt.

Ferner wird die Verwendung eines Filterelements in einem derartigen Filtersystems vorgeschlagen. Das Filterelement ist, wie zuvor erwähnt, insbesondere ein Luftfilterelement. Das Filterelement umfasst die erste Endscheibe und die zweite Endscheibe, zwischen denen das Filtermedium angeordnet ist. Insbesondere an der ersten Endscheibe ist der Positionier- und Dichtabschnitt angeformt.

### Kurze Beschreibung der Zeichnungen

Es zeigt dabei:
- Fig. 1:: eine schematische perspektivische Ansicht einer Ausführungsform eines Filtersystems;
- Fig. 2:: eine schematische Teilschnittansicht des Filtersystems gemäß der Fig. 1;
- Fig. 3:: eine schematische Schnittansicht des Filtersystems gemäß der Fig. 1;
- Fig. 4:: die Detailansicht IV gemäß der Fig. 3;
- Fig. 5:: eine weitere schematische Schnittansicht des Filtersystems gemäß der Fig. 1;
- Fig. 6:: eine schematische Schnittansicht einer Ausführungsform eines Filtergehäuses für das Filtersystem gemäß der Fig. 1;
- Fig. 7:: die Detailansicht VII gemäß der Fig. 6;
- Fig. 8:: eine schematische Schnittansicht einer Ausführungsform eines Fluidauslasses für das Filtersystem gemäß der Fig. 1;
- Fig. 9:: eine schematische Schnittansicht einer weiteren Ausführungsform eines Filtersystems;
- Fig. 10:: die Detailansicht X gemäß der Fig. 9; und
- Fig. 11:: eine schematische Schnittansicht einer weiteren Ausführungsform eines Filtersystems.

In den Figuren sind gleiche oder funktionsgleiche Elemente, sofern nichts anderes angegeben ist, mit denselben Bezugszeichen versehen worden.

### Ausführungsform(en) der Erfindung

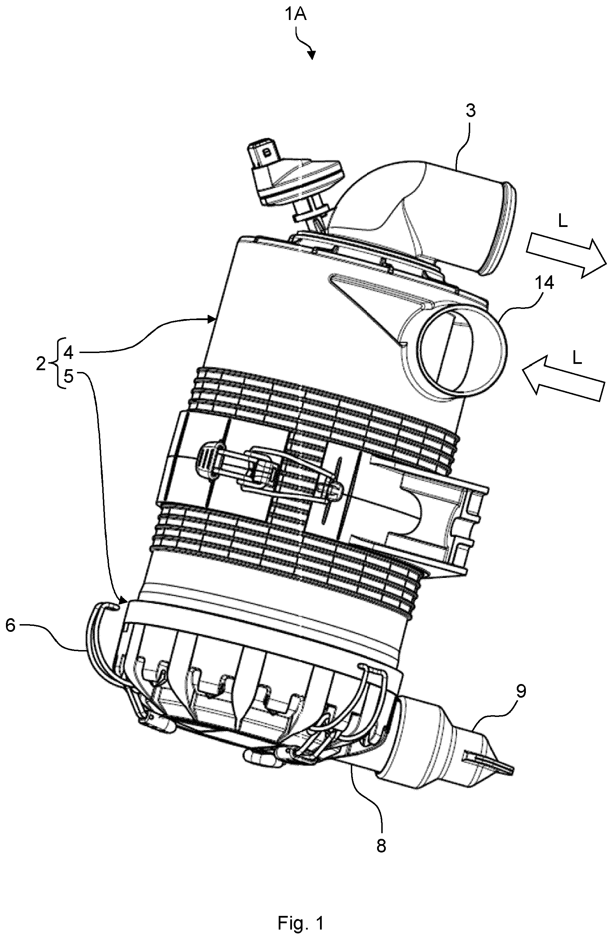

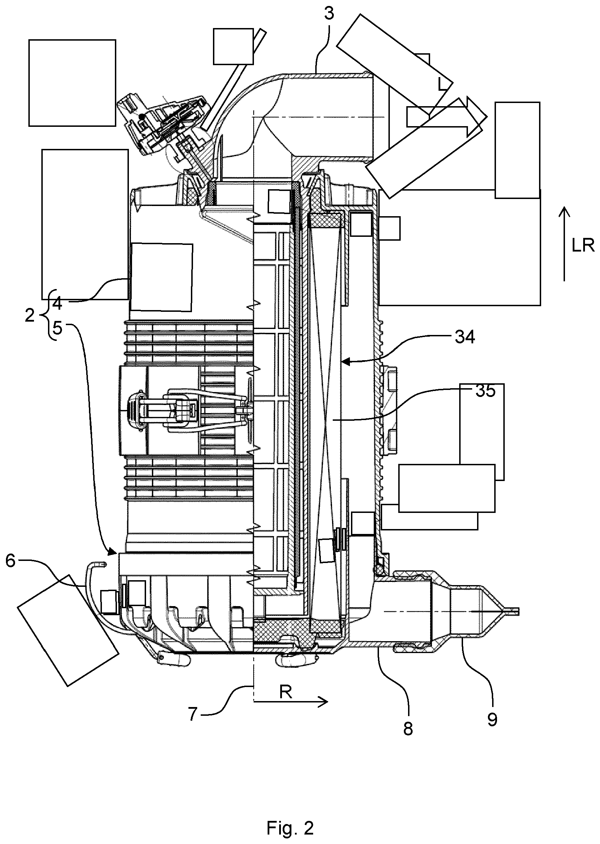

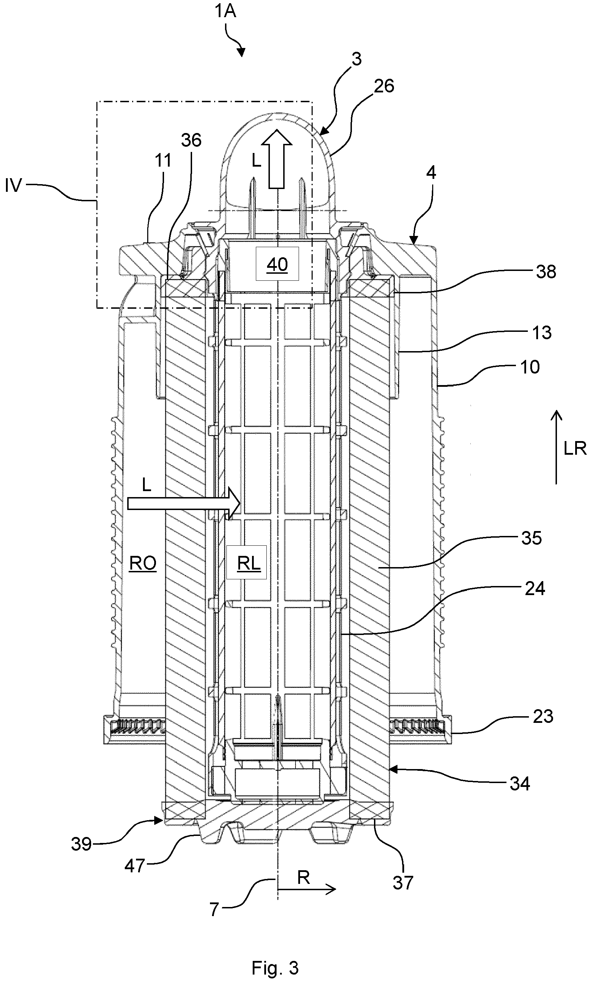

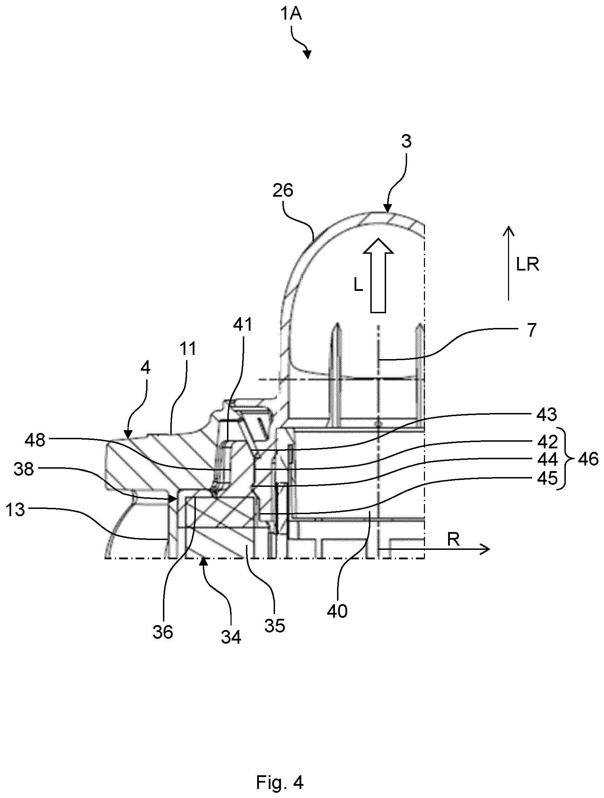

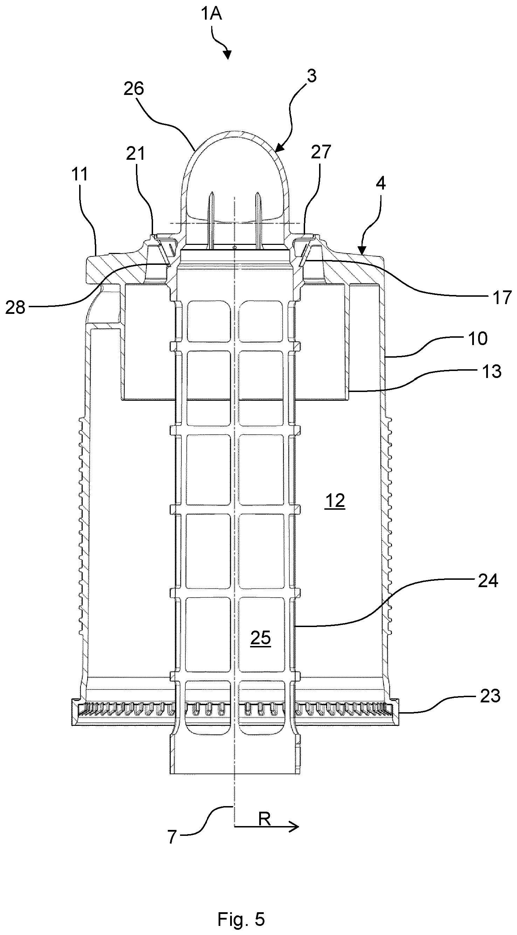

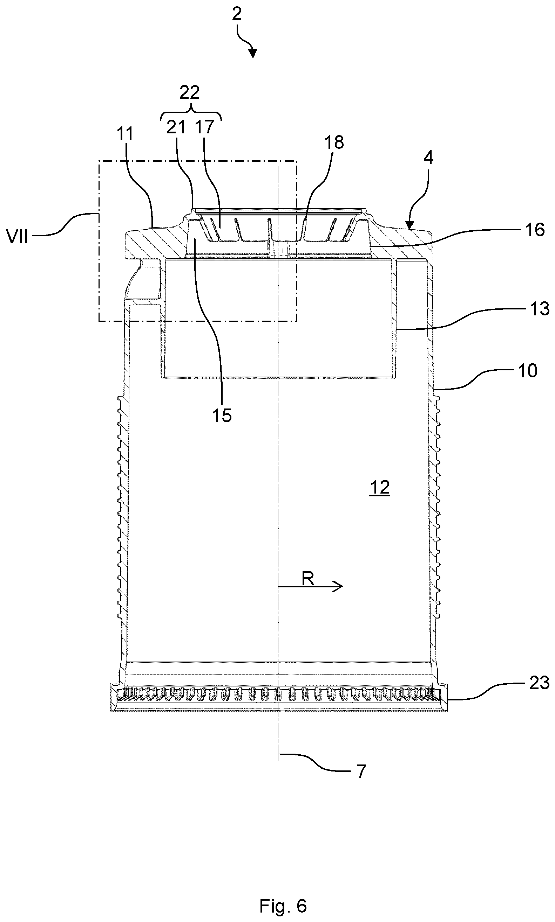

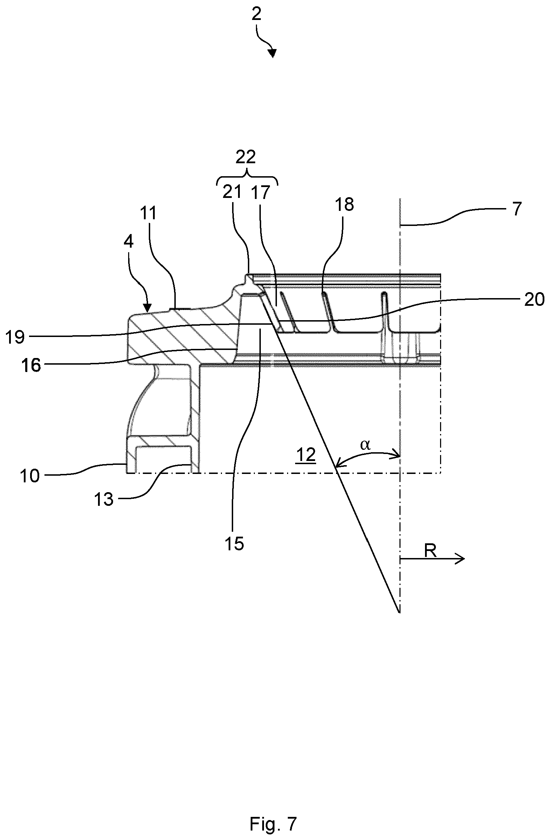

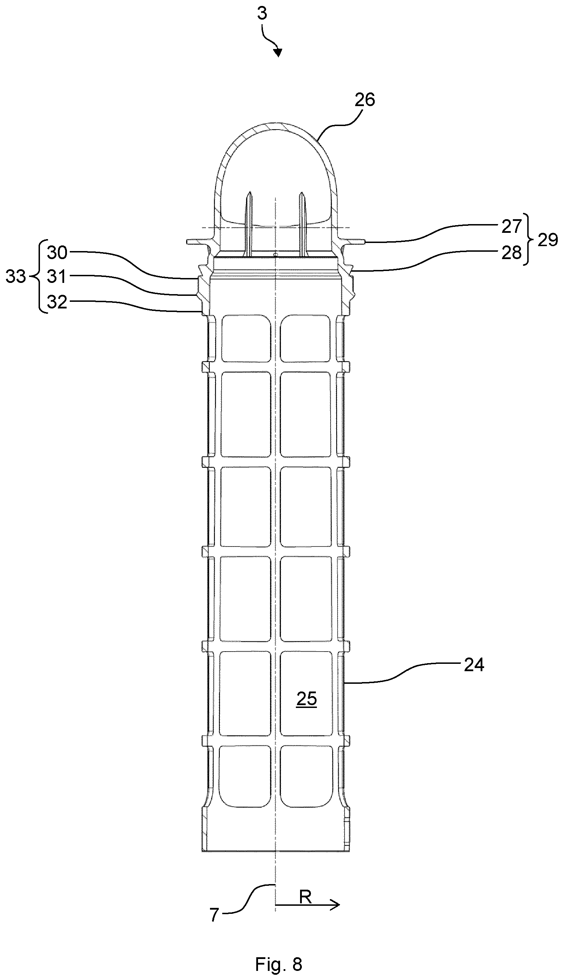

Die Fig. 1 zeigt eine schematische perspektivische Ansicht einer Ausführungsform eines Filtersystems 1A. Die Fig. 2 zeigt eine schematische Teilschnittansicht des Filtersystems 1A. Die Fig. 3 zeigt eine schematische Schnittansicht des Filtersystems 1A. Die Fig. 4 zeigt die Detailansicht IV gemäß der Fig. 3. Die Fig. 5 zeigt eine weitere schematische Schnittansicht des Filtersystems 1A. Die Fig. 6 zeigt eine schematische Schnittansicht einer Ausführungsform eines Filtergehäuses 2 für das Filtersystem 1A. Die Fig. 7 zeigt die Detailansicht VII gemäß der Fig. 6. Die Fig. 8 zeigt eine schematische Schnittansicht einer Ausführungsform eines Fluidauslasses 3 für das Filtersystem 1A. Nachfolgend wird auf die Fig. 1 bis 8 gleichzeitig Bezug genommen.

Das Filtersystem 1A kann auch als Filteranordnung bezeichnet werden. Das Filtersystem 1A kann als Ansaugluftfilter für Brennkraftmaschinen, beispielsweise in Kraftfahrzeugen, Lastkraftwagen, Baufahrzeugen, Wasserfahrzeugen, Schienenfahrzeugen, landwirtschaftlichen Maschinen beziehungsweise Fahrzeugen oder Luftfahrzeugen Anwendung finden. Insbesondere ist das Filtersystem 1A für sogenannte Heavy-Duty-Anwendungen geeignet. Das Filtersystem 1A kann auch bei immobilen Anwendungen, beispielsweise in der Gebäudetechnik, Anwendung finden. Das Filtersystem 1A insbesondere dazu geeignet, Ansaugluft einer Brennkraftmaschine zu filtern. Vorzugsweise ist das Filtersystem 1A ein Luftfiltersystem.

Das Filtergehäuse 2 umfasst ein Gehäuseunterteil 4 und ein Gehäuseoberteil 5. Das Gehäuseoberteil 5 kann auch als Gehäusedeckel bezeichnet werden. Das Gehäuseoberteil 5 ist von dem Gehäuseunterteil 4 demontierbar und wieder an diesem montierbar. Zwischen dem Gehäuseunterteil 4 und dem Gehäuseoberteil 5 kann ein Dichtelement, beispielsweise in Form eines O-Rings, vorgesehen sein. Das Gehäuseoberteil 5 kann Schnellverschlüsse 6, von denen in den Fig. 1 und 2 nur einer mit einem Bezugszeichen versehen ist, aufweisen. Die Anzahl der Schnellverschlüsse 6 ist beliebig. Beispielsweise sind drei derartige Schnellverschlüsse 6 vorgesehen, die gleichmäßig um eine Mittel- oder Symmetrieachse 7 des Filtersystems 1A herum verteilt angeordnet sind.

Mit Hilfe der Schnellverschlüsse 6 kann das Gehäuseoberteil 5 lösbar mit dem Gehäuseunterteil 4 verbunden werden. Hierzu können an dem Gehäuseunterteil 4 Eingriffsabschnitte, beispielsweise in Form von Haken oder Absätzen, vorgesehen sein, in welche die Schnellverschlüsse 6 zum Verbinden des Gehäuseoberteils 5 mit dem Gehäuseunterteil 4 formschlüssig eingreifen. Eine formschlüssige Verbindung entsteht durch das Ineinander- oder Hintergreifen von mindestens zwei Verbindungspartnern, vorliegend den Schnellverschlüssen 6 und den Eingriffsabschnitten. Beispielsweise ist das Gehäuseoberteil 5 ein Kunststoffspritzgussbauteil.

An dem Gehäuseoberteil 5 ist ein Staubaustragsstutzen 8 vorgesehen. Der Staubaustragsstutzen 8 ist senkrecht zu der Symmetrieachse 7 orientiert. An dem Staubaustragsstutzen 8 ist ein Staubaustragsventil 9 angebracht. Mit Hilfe des Staubaustragsventils 9 können abgeschiedene Grobpartikel, wie beispielsweise Staub, kleine Steine, pflanzliche Bestandteile oder dergleichen aus dem Filtergehäuse 2 ausgeschleust werden. Beispielsweise kann das Staubaustragsventil 9 mit Hilfe eines Lastwechsels einer stromabwärts des Filtersystems 1A angeordneten Brennkraftmaschine geöffnet werden.

Das Gehäuseunterteil 4 ist topfförmig ausgebildet und umfasst einen zylinderförmigen Basisabschnitt 10, welcher rotationssymmetrisch zu der Symmetrieachse 7 aufgebaut ist. Stirnseitig ist der Basisabschnitt 10 mit Hilfe eines Bodenabschnitt 11 verschlossen. Der Basisabschnitt 10 und der Bodenabschnitt 11 sind einteilig, insbesondere materialeinstückig, ausgebildet. "Einteilig" oder "einstückig" bedeutet vorliegend, dass der Basisabschnitt 10 und der Bodenabschnitt 11 ein gemeinsames Bauteil bilden und nicht aus unterschiedlichen Einzelbauteilen zusammengesetzt sind. "Materialeinstückig" bedeutet vorliegend, dass der Basisabschnitt 10 und der Bodenabschnitt 11 durchgehend aus demselben Material gefertigt sind. Beispielsweise ist das Gehäuseunterteil 4 ein Kunststoffspritzgussbauteil.

Aus dem Bodenabschnitt 11 heraus und in einen Innenraum 12 des Gehäuseunterteils 4 hinein erstreckt sich ein Anströmschutz 13. Der Anströmschutz 13 ist hohlzylinderförmig und rotationssymmetrisch zu der Symmetrieachse 7 aufgebaut. Der Anströmschutz 13 ist einstückig, insbesondere materialeinstückig, mit dem Bodenabschnitt 11 ausgebildet.

An dem Basisabschnitt 10 ist ein Fluideinlass 14 angeformt. Der Fluideinlass 14 ist senkrecht zu der Symmetrieachse 7 orientiert. Der Fluideinlass 14 ist einstückig, insbesondere materialeinstückig, mit dem Basisabschnitt 10 ausgebildet. In einer Blickrichtung von der Symmetrieachse 7 hin zu dem Fluideinlass 14 verdeckt der Anströmschutz 13 den Fluideinlass 14. So kann verhindert werden, dass ein später noch zu erläuterndes Filterelement direkt mit einem durch den Fluideinlass 14 in das Filtergehäuse 2 einströmenden zu reinigenden Fluid L, beispielsweise Luft, angeströmt wird.

Der Bodenabschnitt 11 weist eine im Wesentlichen kreisförmige Auslassöffnung 15 auf, welche den Bodenabschnitt 11 durchbricht. Die Auslassöffnung 15 ist rotationssymmetrisch zu der Symmetrieachse 7 aufgebaut. Die Auslassöffnung 15 bildet eine vollständig um die Symmetrieachse 7 umlaufende Innenfläche 16. Die Innenfläche 16 ist zu der Symmetrieachse 7 geneigt beziehungsweise schräg zu dieser angeordnet.

In die Auslassöffnung 15 hinein ragen Schnappelemente 17, von denen in den Fig. 6 und 7 jeweils nur eines mit einem Bezugszeichen versehen ist. Die Schnappelemente 17 sind einstückig, insbesondere materialeinstückig, mit dem Bodenabschnitt 11 ausgebildet. Die Anzahl der Schnappelemente 17 ist beliebig. Beispielsweise sind dreizehn Schnappelemente 17 vorgesehen, welche gleichmäßig um die Symmetrieachse 7 herum verteilt angeordnet sind. Zwischen zwei benachbart angeordneten Schnappelementen 17 ist jeweils ein spaltförmiger Zwischenraum 18 vorgesehen. Das heißt, dass die Schnappelemente 17 und die Zwischenräume 18 abwechselnd angeordnet sind.

Die Schnappelemente 17 sind federelastisch verformbar und können von einem in den Fig. 6 und 7 gezeigten unverformten Zustand in einen nicht gezeigten verformten Zustand und zurück verbracht werden. Dabei sind die Schnappelemente 17 in Richtung des unverformten Zustands vorgespannt, insbesondere federvorgespannt. Das heißt, dass die Schnappelemente 17 durch das Aufbringen einer Kraft von dem unverformten Zustand in den verformten Zustand verbracht werden können. Sobald diese Kraft nicht mehr wirkt, verformen sich die Schnappelemente 17 selbsttätig von dem verformten Zustand zurück in den unverformten Zustand.

Die Schnappelemente 17 sind zu der Symmetrieachse 7 in einem Neigungswinkel α geneigt. Jedes Schnappelement 17 weist eine der Innenfläche 16 zugewandte Außenseite 19 sowie eine der Innenfläche 16 abgewandte Innenseite 20 auf. Die Außenseiten 19 und die Innenseiten 20 sind jeweils in dem Neigungswinkel α relativ zu der Symmetrieachse 7 geneigt.

An dem Bodenabschnitt 11 ist ein vollständig um die Symmetrieachse 7 umlaufender Aufnahmeflansch 21 vorgesehen. Der Aufnahmeflansch 21 ist ringförmig und erstreckt sich dem Innenraum 12 abgewandt aus dem Bodenabschnitt 11 heraus. Die Schnappelemente 17 und der Aufnahmeflansch 21 bilden zusammen eine Verbindungsschnittstelle 22, die in später noch zu erläuternder Weise geeignet ist, mit dem Fluidauslass 3 zusammenzuwirken, um diesen formschlüssig mit dem Gehäuseunterteil 4 zu verbinden. Dem Bodenabschnitt 11 abgewandt ist an dem Basisabschnitt 10 ein vollständig um die Symmetrieachse 7 umlaufender Flansch 23 angeformt, an dem das Gehäuseoberteil 5 angeflanscht werden kann.

Nun zurückkehrend zu dem Fluidauslass 3 ist dieser geeignet, gereinigtes Fluid L, beispielsweise Luft, aus dem Filtergehäuse 2 heraus und beispielsweise einer Brennkraftmaschine zuzuführen. Der Fluidauslass 3 ist durch die Auslassöffnung 15 hindurchgeführt und formschlüssig mit dem Gehäuseunterteil 4 verbunden. Der Fluidauslass 3 weist einen rohrförmigen Mittelrohrabschnitt oder Stützrohrabschnitt 24 auf, der in den Innenraum 12 hineinragt und rotationssymmetrisch zu der Symmetrieachse 7 aufgebaut ist. Der Stützrohrabschnitt 24 ist fluiddurchlässig. Hierzu ist der Stützrohrabschnitt 24 gitterförmig aufgebaut und umfasst eine Vielzahl Öffnungen oder Durchbrüche 25.

Neben dem Stützrohrabschnitt 24 umfasst der Fluidauslass 3 einen Stutzenabschnitt 26, welcher einstückig, insbesondere materialeinstückig, mit dem Stützrohrabschnitt 24 ausgebildet ist. Beispielsweise ist der Fluidauslass 3 ein Kunststoffspritzgussbauteil. Der Stutzenabschnitt 26 ist senkrecht zu der Symmetrieachse 7 orientiert und ermöglicht dadurch eine Umleitung des gereinigten Fluids L um 90°. Der Stutzenabschnitt 26 ist außerhalb des Innenraums 12 angeordnet. Der Fluidauslass 3 kann Teil des Filtergehäuses 2 sein. Der Fluidauslass 3 kann auch nicht gekrümmt, sondern gerade sein.

Der Fluidauslass 3 umfasst einen scheibenförmigen und vollständig um die Symmetrieachse 7 umlaufenden Flansch 27. Der Flansch 27 ist oberseitig an dem Stützrohrabschnitt 24 angeformt. Der Flansch 27 kann somit zwischen dem Stützrohrabschnitt 24 und dem Stutzenabschnitt 26 positioniert sein. Der Flansch 27 kann in dem Aufnahmeflansch 21 des Gehäuseunterteils 4 aufgenommen werden.

In der Orientierung der Fig. 8 unterhalb des Flansches 27 ist ein Eingriffsabschnitt 28 vorgesehen, in welchen die Schnappelemente 17 formschlüssig eingreifen können. Der Eingriffsabschnitt 28 ist hierzu als vollständig um die Symmetrieachse 7 umlaufende Ringnut ausgebildet, die oberseitig an den Stützrohrabschnitt 24 angeformt sein kann.

Der Flansch 27 und der Eingriffsabschnitt 28 bilden eine Verbindungsgegenschnittstelle 29, die geeignet ist, mit der Verbindungsschnittstelle 22 zusammenzuwirken, um den Fluidauslass 3 formschlüssig mit dem Gehäuseunterteil 4 zu verbinden.

Zum Verbinden des Fluidauslasses 3 mit dem Gehäuseunterteil 4 wird der Stützrohrabschnitt 24 durch die Auslassöffnung 15 in das Gehäuseunterteil 4 eingeführt bis der Flansch 27 der Verbindungsgegenschnittstelle 29 des Fluidauslasses 3 in dem Aufnahmeflansch 21 der Verbindungsschnittstelle 22 des Gehäuseunterteils 4 aufgenommen ist. Der Flansch 27 liegt dann stirnseitig an dem Bodenabschnitt 11 an. Dabei schnappen oder rasten die Schnappelemente 17 in den Eingriffsabschnitt 28 der Verbindungsgegenschnittstelle 29 ein, so dass der Fluidauslass 3 formschlüssig mit dem Gehäuseunterteil 4 verbunden ist. Der Fluidauslass 3 kann nur dann wieder von dem Gehäuseunterteil 4 getrennt werden, wenn die Schnappelemente 17, beispielsweise mit Hilfe eines Werkzeugs, derart verformt werden, dass diese außer Eingriff mit dem Eingriffsabschnitt 28 geraten. Der Fluidauslass 3 ist gegenüber dem Gehäuseunterteil 4 verdrehbar.

In der Orientierung der Fig. 8 unterhalb des Eingriffsabschnitts 28 ist an dem Fluidauslass 3 eine zylinderförmige Dichtfläche 30 vorgesehen, die vollständig um die Symmetrieachse 7 umläuft. An die Dichtfläche 30 schließt sich eine um die Symmetrieachse 7 umlaufende Rippe 31 an, die in einer Radialrichtung R betrachtet radial über die Dichtfläche 30 übersteht. In der Orientierung der Fig. 8 unterhalb der Rippe 31 ist eine zylinderförmige Außenfläche 32 vorgesehen, die vollständig um die Symmetrieachse 7 umläuft. Die Dichtfläche 30, die Rippe 31 und die Außenfläche 32 bilden eine Dichtungsschnittstelle 33 des Fluidauslasses 3, die geeignet ist, mit einem in dem Filtergehäuse 2 aufnehmbaren Filterelement 34 des Filtersystems 1A wechselzuwirken.

Das Filterelement 34 ist rotationssymmetrisch zu der Symmetrieachse 7 aufgebaut. Das Filterelement 34 umfasst ein Filtermedium 35, das zylinderförmig ist. Das Filtermedium 35 ist rotationssymmetrisch zu der Symmetrieachse 7 aufgebaut. Beispielsweise kann das Filtermedium 35 ringförmig geschlossen sein und in Form eines sternförmig gefalteten Filterbalges vorliegen. Das Filtermedium 35 ist somit vorzugsweise gefaltet.

Dem Filterelement 34 ist eine Längsrichtung LR zugeordnet. Dabei ist die Längsrichtung LR entlang der Symmetrieachse 7 orientiert. In der Orientierung der Fig. 2 bis 4 kann die Längsrichtung LR von unten nach oben orientiert sein. Die Längsrichtung LR kann jedoch auch umgekehrt orientiert sein. Dem Filtermedium 35 sind eine erste Stirnseite 36 und eine zweite Stirnseite 37 zugeordnet. Die Längsrichtung LR kann von der zweiten Stirnseite 37 in Richtung der ersten Stirnseite 36 orientiert sein.

Das Filtermedium 35 ist beispielsweise ein Filterpapier, ein Filtergewebe, ein Filtergelege oder ein Filtervlies. Insbesondere kann das Filtermedium 35 in einem Spinnvlies- oder Meltblown-Verfahren hergestellt sein oder eine derartige, auf einem Vlies- oder Celluloseträger aufgebrachte Faserlage umfassen. Weiter kann das Filtermedium 35 verfilzt oder vernadelt sein. Das Filtermedium 35 kann Naturfasern, wie Cellulose oder Baumwolle, oder Kunstfasern, beispielsweise aus Polyester, Polyvinylsulfit oder Polytetrafluorethylen, aufweisen. Fasern des Filtermediums 35 können bei der Verarbeitung in, schräg und/oder quer oder ungeordnet zu einer Maschinenrichtung orientiert sein.

Das Filterelement 34 weist eine erste, insbesondere offene, Endscheibe 38 auf, die an der ersten Stirnseite 36 des Filtermediums 35 vorgesehen ist. Ferner umfasst das Filterelement 34 ein zweite, insbesondere geschlossene, Endscheibe 39, welche an der zweiten Stirnseite 37 des Filtermediums 35 vorgesehen ist. Das heißt, das Filtermedium 35 ist zwischen der ersten Endscheibe 38 und der zweiten Endscheibe 39 platziert. Die Endscheiben 38, 39 können beispielsweise aus einem, insbesondere in Gießschalen gegossenen, bevorzugt geschäumten, Polyurethanmaterial gefertigt sein. Die Endscheiben 38, 39 können an das Filtermedium 35 angegossen sein. Die erste Endscheibe 38 ist mit der ersten Stirnseite 36 verbunden. Die zweite Endscheibe 39 ist mit der zweiten Stirnseite 37 verbunden.

Die erste Endscheibe 38 umfasst einen mittig angeordneten Durchbruch 40. Durch den Durchbruch 40 ist der Fluidauslass 3, insbesondere der Stützrohrabschnitt 24, hindurchgeführt. Der Durchbruch 40 kann eine Ausströmöffnung des Filterelements 34 sein. Die erste Endscheibe 38 ist plattenförmig. Der ersten Stirnseite 36 des Filtermediums 35 abgewandt erstreckt sich entlang der Längsrichtung LR betrachtet ein ringförmig um die Symmetrieachse 7 umlaufender Positionier- und Dichtabschnitt 41 der ersten Endscheibe 38 aus dieser heraus. Mit Hilfe des Positionier- und Dichtabschnitts 41 kann das Filterelement 34 in dem Filtergehäuse 2 positioniert und gegenüber diesem abgedichtet werden wie nachfolgend noch erläutert wird. Der Durchbruch 40 durchbricht auch den Positionier- und Dichtabschnitt 41.

Wie die Fig. 4 zeigt, umfasst die erste Endscheibe 38 beziehungsweise der Positionier- und Dichtabschnitt 41 innenseitig, das heißt dem Durchbruch 40 zugewandt, eine zylinderförmige Dichtfläche 42, welche rotationssymmetrisch zu der Symmetrieachse 7 aufgebaut ist und vollständig um diese umläuft. Die Dichtfläche 42 ist geeignet, radial gegenüber der Dichtfläche 30 der Dichtungsschnittstelle 33 des Fluidauslasses 3 verpresst zu werden, um so die erste Endscheibe 38 gegenüber der Dichtfläche 30 fluiddicht abzudichten. "Radial" bedeutet dabei in Richtung der Radialrichtung R, die senkrecht zu der Symmetrieachse 7 orientiert ist und von dieser wegweist. Zusätzlich dichtet die erste Endscheibe 38 auch axial, das heißt entlang der Längsrichtung LR betrachtet, gegenüber dem Bodenabschnitt 11 ab, indem die erste Endscheibe 38 stirnseitig gegen den Bodenabschnitt 11 gepresst ist.

Ferner umfasst die erste Endscheibe 38 beziehungsweise der Positionier- und Dichtabschnitt 41 eine in dem Neigungswinkel α zu der Symmetrieachse 7 geneigte und vollständig um diese umlaufende Anlagefläche 43, welche außenseitig, das heißt an den Außenseiten 19 der Schnappelemente 17, an den Schnappelementen 17 anliegt und diese in den Eingriffsabschnitt 28 der Verbindungsgegenschnittstelle 29 des Fluidauslasses 3 presst.

Hierdurch können vorteilhafterweise Relativbewegungen des Fluidauslasses 3, beispielsweise aufgrund von Vibrationen, gegenüber dem Gehäuseunterteil 4 unterdrückt oder zumindest reduziert werden. Dies führt zu einer Geräuschreduktion und zu einem reduzierten Verschleiß der Schnappelemente 17. Der Positionier- und Dichtabschnitt 41 liegt somit unterstützend und dämpfend an den Schnappelementen 17 an. Der Positionier- und Dichtabschnitt 41 verhindert auch ein ungewünschtes Verformen der Schnappelemente 17 derart, dass diese außer Eingriff mit dem Eingriffsabschnitt 28 geraten. Ein ungewolltes Lösen des Fluidauslasses 3 von dem Gehäuseunterteil 4 wird somit zuverlässig verhindert.

An der Dichtfläche 42 ist eine um die Symmetrieachse 7 umlaufende Nut 44 angeformt, in welche die Rippe 31 der Dichtungsschnittstelle 33 des Fluidauslasses 3 formschlüssig eingreift. In der Orientierung der Fig. 4 unterhalb der Nut 44 ist eine Innenfläche 45 vorgesehen, an welcher die Außenfläche 32 der Dichtungsschnittstelle 33 anliegen kann. Die Dichtfläche 42, die Nut 44 und die Innenfläche 45 können eine Dichtungsgegenschnittstelle 46 des Filterelements 34 bilden, welche in der zuvor beschriebenen Art und Weise fluiddicht abdichtend mit der Dichtungsschnittstelle 33 des Fluidauslasses 3 zusammenwirkt. Auch die Anlagefläche 43 kann Teil der Dichtungsgegenschnittstelle 46 sein.

Außenseitig, das heißt der Dichtfläche 42 abgewandt, liegt der Positionier- und Dichtabschnitt 41 an der Innenfläche 16 der Auslassöffnung 15 an (Fig. 2). Dabei weist der Positionier- und Dichtabschnitt 41 eine Vielzahl gleichmäßig um die Symmetrieachse 7 verteilt angeordneter Vertiefungen oder Ausnehmungen 48 auf, in welche an der Innenfläche 16 vorgesehene und sich radial in Richtung der Symmetrieachse 7 erstreckende Eingriffselemente formschlüssig eingreifen. Mit Hilfe dieser Ausnehmungen 48 und der Eingriffselemente ist eine winkelgenaue Positionierung des Filterelements 34 gegenüber dem Gehäuseunterteil 4 möglich. Ferner kann auch verhindert werden, dass nicht zu dem Filtersystem 1A zugehörige Filterelemente in das Gehäuseunterteil 4 eingebaut werden können. Somit erfüllt der Positionier- und Dichtabschnitt 41 nicht nur eine Dichtfunktion, sondern auch eine Positionierfunktion.

Nun zurückkehrend zu der ebenfalls plattenförmigen zweiten Endscheibe 39 ist diese rotationssymmetrisch zu der Symmetrieachse 7 aufgebaut und verschließt die zweite Stirnseite 37 des Filtermediums 35 fluiddicht. Der zweiten Stirnseite 37 abgewandt erstrecken sich aus der zweiten Endscheibe 39 heraus Positionierelemente 47, von denen in der Fig. 3 nur eines mit einem Bezugszeichen versehen ist. Die Anzahl der Positionierelemente 47 ist beliebig. Beispielsweise können fünf derartige Positionierelemente 47 vorgesehen sein, welche gleichmäßig um die Symmetrieachse 7 herum verteilt angeordnet sind.

Die Funktion des Filterelements 34 beziehungsweise des Filtersystems 1A wird nachfolgend anhand der Fig. 3 erläutert. Zu reinigendes Fluid L, beispielsweise Luft, wird durch den Fluideinlass 14 in das Filtergehäuse 2, insbesondere in den Innenraum 12, eingesaugt und tritt dann von einer Rohseite RO des Filterelements 34 durch das Filtermedium 35 hindurch zu einer von dem Filtermedium 35 beziehungsweise dem Stützrohrabschnitt 24 umgebenen Reinseite RL des Filterelements 34. Dabei werden aus dem Fluid L Partikel, wie beispielsweise Staub oder dergleichen, abgeschieden. Der Stützrohrabschnitt 24 stützt das Filtermedium 35 innenseitig ab. Aus dem Filterelement 34 strömt das gereinigte Fluid L durch den Fluidauslass 3 aus dem Filtergehäuse 2 heraus und kann beispielsweise einer Brennkraftmaschine zugeführt werden.

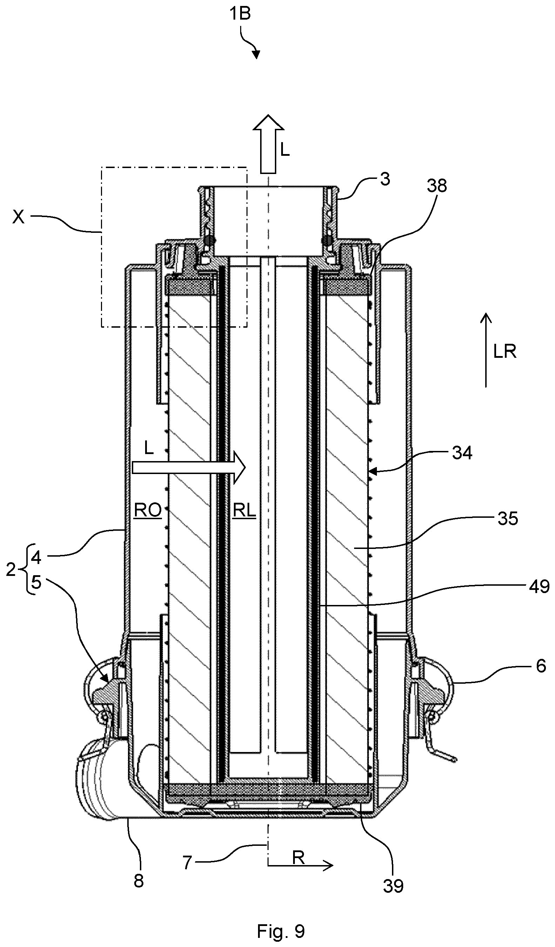

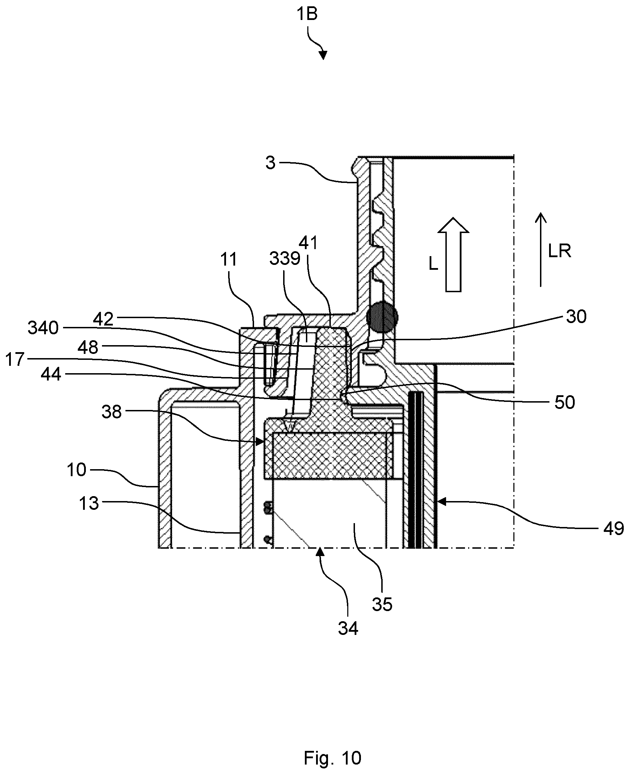

Die Fig. 9 zeigt eine schematische Schnittansicht einer weiteren Ausführungsform eines Filtersystems 1B. Die Fig. 10 zeigt die Detailansicht X gemäß der Fig. 9. Nachfolgend wird auf die Fig. 9 und 10 gleichzeitig Bezug genommen. Im Folgenden wird nur auf Unterschiede des Filtersystems 1B im Vergleich zu dem Filtersystem 1A eingegangen.

Bei dem Filtersystem 1B umfasst der Fluidauslass 3 keinen Stützrohrabschnitt 24. Vielmehr ist ein in dem Filterelement 34 aufgenommenes Sekundärfilterelement 49 vorgesehen. Das Sekundärfilterelement 49 ist formschlüssig mit dem Fluidauslass 3 verbunden, beispielsweise mit diesem verrastet. Das Sekundärfilterelement 49 umfasst eine um die Symmetrieachse 7 umlaufende Rippe 50, welche formschlüssig in die Nut 44 des Positionier- und Dichtabschnitts 41 der ersten Endscheibe 38 eingreift und radial gegenüber dieser abdichtet. Der Fluidauslass 3 weist keine Krümmung auf, sondern erstreckt sich entlang der Symmetrieachse 7.

Die Schnappelemente 17 sind nicht an dem Gehäuseunterteil 4, sondern an dem Fluidauslass 3 vorgesehen und formschlüssig mit dem Gehäuseunterteil 4 verrastet. Der Positionier- und Dichtabschnitt 41 drückt entlang der Radialrichtung R betrachtet von innen gegen die Schnappelemente 17, so dass sich die formschlüssige Verbindung zwischen dem Fluidauslass 3 und dem Gehäuseunterteil 4 nicht ungewollt lösen kann. Der Positionier- und Dichtabschnitt 41 weist in der abgebildeten Ausführungsform auf seiner radialen Außenseite Auskerbungen 339 auf, wie beispielsweise aus WO2012172019A1 bekannt, wobei die in Fig. 9 - 11 abgebildeten Schnitte jeweils durch eine solche Auskerbung verlaufen. In den Bereichen der Auskerbungen 339 ist die Radialerstreckung des Positionier- und Dichtabschnitts 41 reduziert. In den Bereichen 340 des Positionier- und Dichtabschnitts 41, in welchen keine Auskerbung 339 angeordnet ist, drückt der Positionier- und Dichtabschnitt 41 entlang der Radialrichtung R betrachtet von innen gegen die Schnappelemente 17 oder liegt zumindest an diesen an.

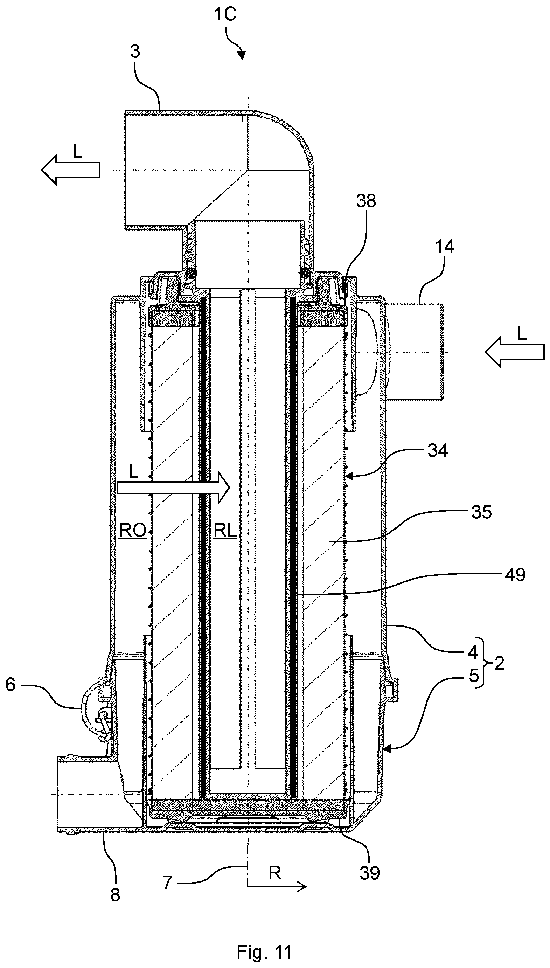

Die Fig. 11 zeigt eine schematische Schnittansicht einer weiteren Ausführungsform eines Filtersystems 1C. Das Filtersystem 1C unterscheidet sich von dem Filtersystem 1B nur dadurch, dass der Fluidauslass 3 wie bei dem Filtersystem 1A um 90° gekrümmt und somit senkrecht zu der Symmetrieachse 7 orientiert ist.

### Verwendete Bezugszeichen:

- 1A: Filtersystem
- 1B: Filtersystem
- 1C: Filtersystem
- 2: Filtergehäuse
- 3: Fluidauslass
- 4: Gehäuseunterteil
- 5: Gehäuseoberteil
- 6: Schnellverschluss
- 7: Symmetrieachse
- 8: Staubaustragsstutzen
- 9: Staubaustragsventil
- 10: Basisabschnitt
- 11: Bodenabschnitt
- 12: Innenraum
- 13: Anströmschutz
- 14: Fluideinlass
- 15: Auslassöffnung
- 16: Innenfläche
- 17: Schnappelement
- 18: Zwischenraum
- 19: Außenseite
- 20: Innenseite
- 21: Aufnahmeflansch
- 22: Verbindungsschnittstelle
- 23: Flansch
- 24: Stützrohrabschnitt
- 25: Durchbruch
- 26: Stutzenabschnitt
- 27: Flansch
- 28: Eingriffsabschnitt
- 29: Verbindungsgegenschnittstelle
- 30: Dichtfläche
- 31: Rippe
- 32: Außenfläche
- 33: Dichtungsschnittstelle
- 34: Filterelement
- 35: Filtermedium
- 36: Stirnseite
- 37: Stirnseite
- 38: Endscheibe
- 39: Endscheibe
- 40: Durchbruch
- 41: Positionier- und Dichtabschnitt
- 42: Dichtfläche
- 43: Anlagefläche
- 44: Nut
- 45: Innenfläche
- 46: Dichtungsgegenschnittstelle
- 47: Positionierelement
- 48: Ausnehmung
- 49: Sekundärfilterelement
- 50: Rippe
- 339: Auskerbung
- 340: Bereiche des Positionier- und Dichtabschnitts 41, in welchen keine Auskerbung 339 angeordnet ist
- L: Fluid
- LR: Längsrichtung
- R: Radialrichtung
- RL: Reinseite
- RO: Rohseite
- α: Neigungswinkel

## Patentansprüche

1. Filtersystem (1A, 1B, 1C) mit einem Filtergehäuse (2), welches einen Fluideinlass (14) zum Einleiten eines Fluids (L) in das Filtergehäuse (2) umfasst, einem Fluidauslass (3) zum Ausleiten des Fluids (L) aus dem Filtergehäuse (2), einem entnehmbar in dem Filtergehäuse (2) aufgenommenen Filterelement (34), welches einen Positionier- und Dichtabschnitt (41) zum Positionieren und Abdichten des Filterelements (34) gegenüber dem Filtergehäuse (2) umfasst, und elastisch verformbaren Schnappelementen (17), mit deren Hilfe das Filtergehäuse (2) und der Fluidauslass (3) formschlüssig miteinander verbunden sind, wobei der Positionier- und Dichtabschnitt (41) radial an den Schnappelementen (17) anliegt, wobei die Schnappelemente (17) in einem Neigungswinkel (α) relativ zu einer Symmetrieachse (7) des Filtersystems (1A) geneigt sind, und wobei der Positionier- und Dichtabschnitt (41) eine Anlagefläche (43) umfasst, welche radial gegen die Schnappelemente (17) gepresst ist und welche ebenfalls in dem Neigungswinkel (α) relativ zu der Symmetrieachse (7) geneigt ist, wobei der Fluidauslass (3) eine Dichtungsschnittstelle (33) umfasst, mit welcher eine korrespondierende Dichtungsgegenschnittstelle (46) des Positionier- und Dichtabschnitts (41) radial verpresst ist, und wobei der Positionier- und Dichtabschnitt (41) in Form eines sich von einer offenen Endscheibe (38) des Filterelements (34) axial vom Filterelement (34) weg erstreckenden Ringwulstes ausgeführt ist, **dadurch gekennzeichnet, dass** die Dichtungsgegenschnittstelle (46) eine zylindrische Dichtfläche (42) und die Anlagefläche (43) aufweist, und wobei die Dichtfläche (42) auf einer radial innen liegenden Seite des Ringwulstes angeordnet ist und wobei die Schnappelemente (17) an einem Gehäuseunterteil (4) des Filtergehäuses (2) vorgesehen sind, und wobei die Schnappelemente (17) in einen an dem Fluidauslass (3) vorgesehenen Eingriffsabschnitt (28) formschlüssig eingreifen.

2. Filtersystem nach Anspruch 1, wobei der Positionier- und Dichtabschnitt (41) radial gegen die Schnappelemente (17) gepresst ist.

3. Filtersystem nach einem der vorhergehenden Ansprüche, wobei die Schnappelemente (17) in einen Eingriffsabschnitt (28) formschlüssig eingreifen.

4. Filtersystem nach Anspruch 3, wobei die Schnappelemente (17) eine dem Eingriffsabschnitt (28) zugewandte Seite und eine dem Eingriffsabschnitt (28) abgewandte Seite aufweisen, wobei der Positionier- und Dichtabschnitt (41) radial an dem Eingriffsabschnitt (28) abgewandten Seiten der Schnappelementen (17) anliegt.

5. Filtersystem nach einem der vorhergehenden Ansprüche, wobei die Schnappelemente (17) und ein an dem Gehäuseunterteil (4) vorgesehener ringförmiger Aufnahmeflansch (21) eine Verbindungsschnittstelle (22) des Gehäuseunterteils (4) bilden.

6. Filtersystem nach Anspruch 5, wobei der Eingriffsabschnitt (28) und ein an dem Fluidauslass (3) vorgesehener scheibenförmiger Flansch (27) eine Verbindungsgegenschnittstelle (29) des Fluidauslasses (3) bilden, und wobei die Verbindungsschnittstelle (22) und die Verbindungsgegenschnittstelle (29) derart zusammenwirken, dass die Schnappelemente (17) formschlüssig in den Eingriffsabschnitt (28) eingreifen und der Flansch (27) in dem Aufnahmeflansch (21) aufgenommen ist.

7. Filtersystem nach einem der vorhergehenden Ansprüche, wobei der Fluidauslass (3) gegenüber dem Gehäuseunterteil (4) verdrehbar ist.

8. Filtersystem nach einem der vorhergehenden Ansprüche, wobei der Fluidauslass (3) einen gitterförmigen Stützrohrabschnitt (24), welcher in das Filterelement (34) hineinragt, und einen, insbesondere um 90° gekrümmten, Stutzenabschnitt (26) umfasst, welcher aus dem Filtergehäuse (2) herausragt.

## Claims

1. A filter system (1A, 1B, 1C) having a filter housing (2) including a fluid inlet (14) for introducing a fluid (L) into the filter housing (2), a fluid outlet (3) for discharging the fluid (L) from the filter housing (2), a filter element (34) removably accommodated in the filter housing (2), the filter element comprising a positioning and sealing section (41) for positioning and sealing the filter element (34) with respect to the filter housing (2), and elastically deformable snap-fit elements (17), by means of which the filter housing (2) and the fluid outlet (3) are positively connected to one another, wherein the positioning and sealing section (41) radially abuts on the snap-fit elements (17), wherein the snap-fit elements (17) are inclined at an angle of inclination (α) relative to a symmetry axis (7) of the filter system (1A), and wherein the positioning and sealing section (41) comprises a contact surface (43) pressed radially against the snap-fit elements (17) and also inclined at the angle of inclination (α) relative to the symmetry axis (7), wherein the fluid outlet (3) comprises a sealing interface (33) against which a corresponding sealing mating interface (46) of the positioning and sealing section (41) is radially compressed, and wherein the positioning and sealing section (41) is designed in the shape of an annular bead extending axially away from an open end disc (38) of the filter element (34) by moving away from the filter element (34), **characterized in that** the sealing mating surface (46) features a cylindrical sealing surface (42) and the contact surface (43), and wherein the sealing surface (42) is disposed on a radially inner side of the annular bead, and wherein the snap-fit elements (17) are provided on a housing lower part (4) of the filter housing (2), and wherein the snap-fit elements (17) engage positively with an engagement section (28) provided on the fluid outlet (3).

2. The filter system according to claim 1, wherein the positioning and sealing section (41) is pressed radially against the snap-fit elements (17).

3. The filter system according to one of the preceding claims, wherein the snap-fit elements (17) engage positively with an engagement section (28).

4. The filter system according to claim 3, wherein the snap-fit elements (17) feature a side facing the engagement section (28) and a side facing away from the engagement section (28), wherein the positioning and sealing section (41) abuts radially on the sides of the snap-fit elements (17) facing away from the engagement section (28).

5. The filter system according to one of the preceding claims, wherein the snap-fit elements (17) and an annular receiving flange (21) provided on the housing lower part (4) form a connection interface (22) of the housing lower part (4).

6. The filter system according to claim 5, wherein the engagement section (28) and a disc-shaped flange (27) provided on the fluid outlet (3) form a connection mating interface (29) of the fluid outlet (3), and wherein the connection interface (22) and the connection mating interface (29) interact such that the snap-fit elements (17) engage the engagement section (28) positively and the flange (27) is received in the receiving flange (21).

7. The filter system according to one of the preceding claims, wherein the fluid outlet (3) is pivotable relative to the housing lower part (4).

8. The filter system according to one of the preceding claims, wherein the fluid outlet (3) comprises a grid-shaped support tube section (24) extending into the filter element (34) and a nozzle section (26) in particular bent at 90° protruding from the filter housing (2).

## Revendications

1. Système de filtre (1A, 1B, 1C) ayant un boîtier de filtre (2) comprenant une entrée de fluide (14) pour introduire un fluide (L) dans le boîtier de filtre (2), une sortie de fluide (3) pour évacuer le fluide (L) hors du boîtier de filtre (2), un élément de filtre (34) logé de manière amovible dans le boîtier de filtre (2), l'élément de filtre comprenant une section de positionnement et d'étanchéité (41) pour positionner et assurer l'étanchéité de l'élément de filtre (34) par rapport au boîtier de filtre (2), et des éléments d'encliquetage (17) déformables élastiquement, à l'aide desquels le boîtier de filtre (2) et la sortie de fluide (3) sont reliés l'un à l'autre par engagement positif, la section de positionnement et d'étanchéité (41) s'appuyant radialement contre les éléments d'encliquetage (17), les éléments d'encliquetage (17) étant inclinés selon un angle d'inclinaison (α) par rapport à un axe de symétrie (7) du système de filtre (1A), et la section de positionnement et d'étanchéité (41) comprenant une surface de contact (43) pressée radialement contre les éléments d'encliquetage (17) et qui est également inclinée selon l'angle d'inclinaison (α) par rapport à l'axe de symétrie (7), la sortie de fluide (3) comprenant une interface d'étanchéité (33) avec laquelle une contre-interface d'étanchéité correspondante (46) de la section de positionnement et d'étanchéité (41) est compressée radialement, et la section de positionnement et d'étanchéité (41) se présentant sous la forme d'un bourrelet annulaire s'étendant axialement à partir d'un disque d'extrémité ouvert (38) de l'élément filtrant (34) en s'éloignant de l'élément filtrant (34), **caractérisé en ce que** la contre-interface d'étanchéité (46) présente une surface d'étanchéité cylindrique (42) et la surface de contact (43), et la surface d'étanchéité (42) étant disposée sur un côté radialement intérieur du bourrelet annulaire et les éléments d'encliquetage (17) étant prévus sur une partie inférieure (4) du boîtier de filtre (2), et les éléments d'encliquetage (17) s'engageant par complémentarité de forme dans une partie d'engagement (28) prévue sur la sortie de fluide (3).

2. Système de filtre selon la revendication 1, la section de positionnement et d'étanchéité (41) étant pressée radialement contre les éléments d'encliquetage (17).

3. Système de filtre selon l'une quelconque des revendications précédentes, les éléments d'encliquetage (17) s'engageant par complémentarité de forme dans une partie d'engagement (28).

4. Système de filtre selon la revendication 3, les éléments d'encliquetage (17) présentant un côté tourné vers la partie d'engagement (28) et un côté opposé à la partie d'engagement (28), la section de positionnement et d'étanchéité (41) s'appuyant radialement contre les côtés des éléments d'encliquetage (17) opposés à la partie d'engagement (28).

5. Système de filtre selon l'une quelconque des revendications précédentes, les éléments d'encliquetage (17) et une bride de fixation annulaire (21) prévue sur la partie inférieure du boîtier (4) formant une interface de raccordement (22) de la partie inférieure du boîtier (4).

6. Système de filtre selon la revendication 5, la partie d'engagement (28) et une bride en forme de disque (27) prévue sur la sortie de fluide (3) formant une contre-interface de raccordement (29) de la sortie de fluide (3), et l'interface de raccordement (22) et la contre-interface de raccordement (29) coopérants de telle sorte que les éléments d'encliquetage (17) s'engagent par complémentarité de forme dans la partie d'engagement (28) et que la bride (27) étant logée dans la bride de fixation (21).

7. Système de filtre selon l'une quelconque des revendications précédentes, la sortie de fluide (3) pouvant pivoter par rapport à la partie inférieure du boîtier (4).

8. Système de filtre selon l'une quelconque des revendications précédentes, la sortie de fluide (3) comprenant une partie du tube de support en forme de grille (24), qui s'étend à l'intérieur de l'élément de filtre (34), et une partie de raccord (26), courbée notamment à 90°, qui s'étend hors du boîtier de filtre (2).
